# FASCICULE DE BREVET EUROPEEN

(11) **EP 0 922 910 B1**
(45) Date de publication et mention de la délivrance du brevet: **04.06.2003**
(21) Numéro de dépôt: 98403085.8
(22) Date de dépôt: 08.12.1998
(51) Int. Cl.: F24C 15/00, F21V 8/00

(54) **Dispositif d'éclairage multiniveau d'une enceinte de four domestique**
Mehrebenenbeleuchtungsvorrichtung für Haushaltofenmuffel
Multilevel illumination device for domestic oven muffle

(30) Priorité: 12.12.1997 FR 9715779
(43) Date de publication de la demande: 16.06.1999
(73) Titulaire: COMPAGNIE EUROPEENNE POUR L'EQUIPEMENT MENAGER CEPEM, F-45142 St Jean-de-la-Ruelle Cédex (FR)
(72) Inventeur: Chevrier, Jean-Paul, Thomson-CSF P.I.D. Brevets, 94117 Arcueil Cedex (FR); Deforges, Jacques, Thomson-CSF P.I.D. Brevets, 94117 Arcueil Cedex (FR); Hilbey, Serge, Thomson-CSF P.I.D. Brevets, 94117 Arcueil Cedex (FR); Magnant, Dominique, Thomson-CSF P.I.D. Brevets, 94117 Arcueil Cedex (FR)
(74) Mandataire: Santarelli

(56) Documents cités:
- EP-A- 0 290 267
- DE-A- 3 511 575
- DE-A- 3 808 716
- DE-A- 4 100 605
- DE-U- 8 609 316
- DE-U- 29 611 784
- US-A- 5 134 550
- US-A- 5 664 862

## Description

L'invention concerne un dispositif d'éclairage pour enceintes de cuisson de tout type de four domestique.

L'enceinte de cuisson est la cavité du four destinée à recevoir les mets à cuire. Elle est équipée de gradins, positionnés sur les parois latérales de la cavité, les uns en face des autres, et sur lesquels peuvent reposer des plaques de cuisson. De nombreux fours sont conçus pour permettre la cuisson de plusieurs plats simultanément, à différents niveaux de l'enceinte, en général deux ou trois niveaux; on parle alors de cuisson multiniveau. Il est préférable dans ce type de four de disposer d'un éclairage latéral, les sources d'éclairage étant situées sur les parois latérales de l'enceinte; en effet, si, par exemple, une source d'éclairage est placée au niveau du plafond de l'enceinte, un plat posé sur une plaque de cuisson supérieure est bien éclairé mais fait de l'ombre aux plats éventuellemnt placés sur des plaques de cuisson inférieures. Ainsi, dans des fours traditionnels, ou catalytiques, dans lesquels la température de l'enceinte ne dépasse pas 300°, il est connu de placer des lampes juste derrière les parois latérales de la cavité, derrière des pièces de verre appelées verrines, qui peuvent être diffusantes. Il y a par exemple deux lampes de chaque côté de l'enceinte; la lumière est avantageusement diffusée selon de larges lobes de diffusion, permettant ainsi un éclairage multiniveau, c'est à dire que l'éclairement est sensiblement homogène dans tout le volume utile de la cavité. On appelle ici volume utile de la cavité, le volume de plus grande probabilité de présence des plats que l'on veut éclairer au cours de la cuisson. Pour bénéficier d'un éclairement intense et étendu, il est préférable de rapprocher au maximum les lampes de l'enceinte.

Cependant, la température de l'enceinte dans certains types de fours peut s'élever au-delà de 300°. C'est le cas par exemple des fours à pyrolyse pour lesquels la température à l'intérieur de l'enceinte peut monter jusqu'aux environs de 500° pendant la phase de nettoyage du four. Les normes de sécurité imposent une température maximale sur la paroi extérieure du four qui rend nécessaire la présence d'une couche d'isolant d'épaisseur minimale; cela impose une largeur maximale de l'enceinte compte tenu de la cote extérieure du four qui est fixée; un dispositif d'éclairage positionné en plus au niveau des parois latérales de l'enceinte diminue encore la largeur de celle-ci, ce qui n'est pas souhaitable. D'autre part, des lampes placées à proximité de l'enceinte doivent résister aux très fortes températures, ce qui nécessite généralement une conception particulière et donc coûteuse des lampes.

Le brevet DE 4100605 A1 (Hurst & Schröder) propose un dispositif d'éclairage de four comportant au moins un faisceau de fibres optiques, la lampe se trouvant à l'une des extrémités du faisceau, l'autre extrémité étant agencée de telle sorte à permettre un éclairage latérale du four. Ce dispositif permet d'éloigner la lampe des zones de fortes températures. Cette solution présente cependant plusieurs inconvénients. En particulier, elle met en oeuvre des matériaux de coût élevé, car les fibres optiques utilisées doivent pouvoir tenir aux très fortes températures, et dont la mise en oeuvre est assez complexe; le couplage entre la lampe et les fibres nécessite en effet un soin particulier pour ne pas perdre d'énergie lumineuse. D'autre part, les faisceaux de fibres ne peuvent pas présenter des diamètres très importants, ce qui conduit à un éclairage ponctuel de l'enceinte du four.

L'invention pallie ces inconvénients et propose un dispositif d'éclairage de l'enceinte dans lequel la lampe est positionnée à distance des parois, par exemple au dessus de la cavité, mais les sources d'éclairage sont maintenues au niveau des parois latérales de l'enceinte, grâce à un guide de lumière, qui est peu encombrant, facile à mettre en place et de faible coût.

Plus précisément, l'invention a pour objet un dispositif d'éclairage de l'enceinte de cuisson d'un four domestique conformément à la revendication 1.

Le dispositif selon l'invention permet ainsi grâce au guide de lumière, un éclairage multiniveau de l'enceinte, homogène, tout en maintenant une largeur maximale de l'enceinte. Il permet de mettre en oeuvre, même dans des fours de type four à pyrolyse, des lampes standards, qui ne présentent pas de particularités quant à leur résistance à la chaleur et constitue une solution simple, de faible coût et de grande efficacité au problème de l'éclairage multiniveau dans ce type de four.

D'autres avantages et particularités de l'invention apparaîtront à l'aide de la description qui suit et des figures annexées qui représentent :
- la figure 1, un exemple de dispositif selon l'invention inséré dans un four domestique;
- la figure 2, un exemple de réalisation des moyens de guidage de lumière mis en oeuvre dans le dispositif selon l'invention;
- la figure 3, un autre exemple de réalisation de ces moyens.

Sur ces figures, les éléments homologues sont référencés par les mêmes repères.

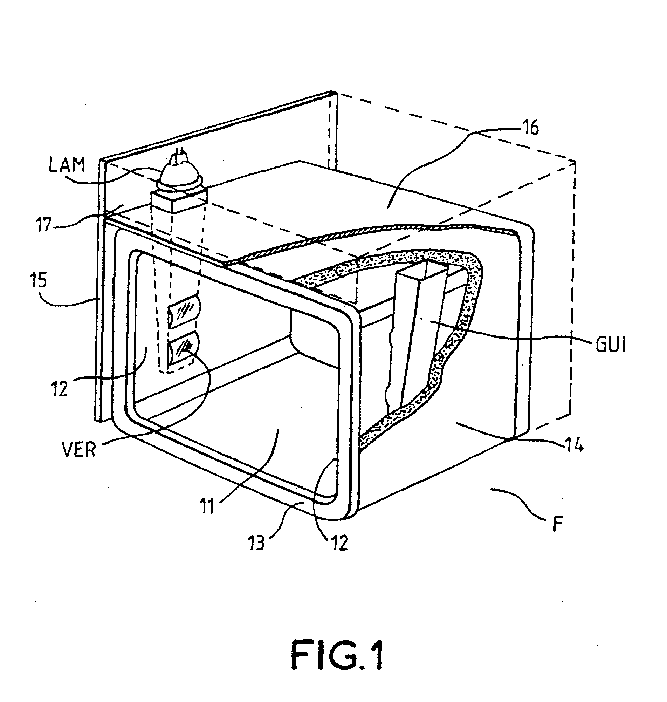

La figure 1 représente le schéma d'un four domestique F sur lequel, par souci de clarté, seuls quelques éléments représentatifs sont figurés. En particulier, le four comprend une enceinte de cuisson 11, appelée aussi 'moufle', délimitée par un pourtour. Les gradins, non représentés ici, peuvent être par exemple emboutis ou rapportés sur les parois latérales 12 de l'enceinte formant les faces latérales internes du pourtour. Il peut y en avoir par exemple trois ou quatre de chaque côté. L'élément frontal 13 constitue la façade. Le pourtour du four contient généralement un isolant 14 permettant de limiter la température sur la face extérieure de la tôle 15 formant les côtés du four. On trouve le plus souvent un système de refroidissement du four dans sa partie supérieure, au dessus d'une tôle intermédiaire 16. Ce système n'est pas représenté sur la figure 1; il est constitué par exemple d'un élément de ventilation, appelé aussi 'tangentiel', qui, associé à un guide d'air permet de faire circuler l'air et d'évacuer ainsi la chaleur. Le bandeau 17 situé au-dessus de la façade du four, représenté en pointillé sur la figure 1, constitue le tableau de commande du four pour l'utilisateur.

L'exemple de réalisation du dispositif d'éclairage selon l'invention représenté sur la figure 1 comporte de chaque côté du four une lampe LAM et son système d'alimentation (non représenté); la lumière émise par chaque lampe est envoyée dans un guide de lumière GUI. On entend ici par guide de lumière un conduit unique comportant au moins une zone d'entrée et au moins une zone de sortie; la lumière pénétre par la zone d'entrée et, les matériaux dont est constitué le guide ainsi que sa forme géométrique sont tels que quasiment la totalité de la lumière sorte par la zone de sortie. Dans le dispositif selon l'invention, le guide GUI n'est pas un simple conduit transportant la lumière selon une seule direction. Il permet de transporter la lumière vers des ouvertures faites au niveau des parois latérales 12. Il peut y avoir par exemple deux ou trois ouvertures de chaque côté, constituant autant de sources de lumière, ou bien une seule, sur toute la hauteur des gradins. Le nombre des ouvertures, leurs positions sur les parois latérales de l'enceinte, la nature et la forme du guide sont choisis pour obtenir un éclairement homogène et maximal dans tout le volume utile de l'enceinte. Avantageusement, les ouvertures sont choisies de taille suffisante, par exemple des ouvertures de forme rectangulaire, de plusieurs centimètres de côté, permettant un éclairage homogène de l'enceinte. Dans l'exemple de la figure 1, les lampes LAM sont placées sur le dessus du four; c'est en effet une partie du four où, du fait de la circulation de l'air assurant le refroidissement du four, la température n'est pas trop élévée. En outre, montées par exemple sur des tiroirs coulissants débouchant sur le bandeau, les lampes peuvent être facilement accessibles pour l'utilisateur. Mais les lampes pourraient être positionnées n'importe où la température le permet et, de manière avantageuse, à un endroit accessible, par exemple en dessous du four si l'encombrement le permet. Dans une variante, le dispositif selon l'invention peut comporter une seule lampe. La lumière émise peut alors être dirigée vers un seul côté du four, l'éclairage ne se faisant donc que d'un côté. L'éclairage peut aussi se faire des deux côtés, par exemple grâce à un système de miroirs répartissant le flux émis par la lampe vers deux guides de lumière placés de part et d'autre de l'enceinte.

Pour optimiser la quantité de lumière pénétrant dans le guide, tout en maintenant la lampe à l'extérieur du guide afin de la préserver des fortes températures, la lampe pouvant être placée par exemple dans une zone ventilée, il est préférable que le faisceau lumineux émis soit parallèle ou faiblement divergent. Pour cela, on peut disposer un réflecteur au-dessus de l'ampoule de la lampe. Le réflecteur permet en effet de collecter le flux émis vers l'arrière pour le renvoyer dans la direction du guide. Dans certaines lampes du commerce, le réflecteur fait partie intégrante de la lampe. On peut aussi choisir une lampe sans réflecteur et le rajouter ensuite. La forme du réflecteur peut par exemple être parabolique; le filament de la lampe est alors placé au voisinage du foyer de la parabole, ce qui génère l'émission d'un faisceau lumineux parallèle ou faiblement divergent. Dans ce cas, il est préférable de choisir une lampe avec un petit filament, par exemple une lampe de type lampe halogène.

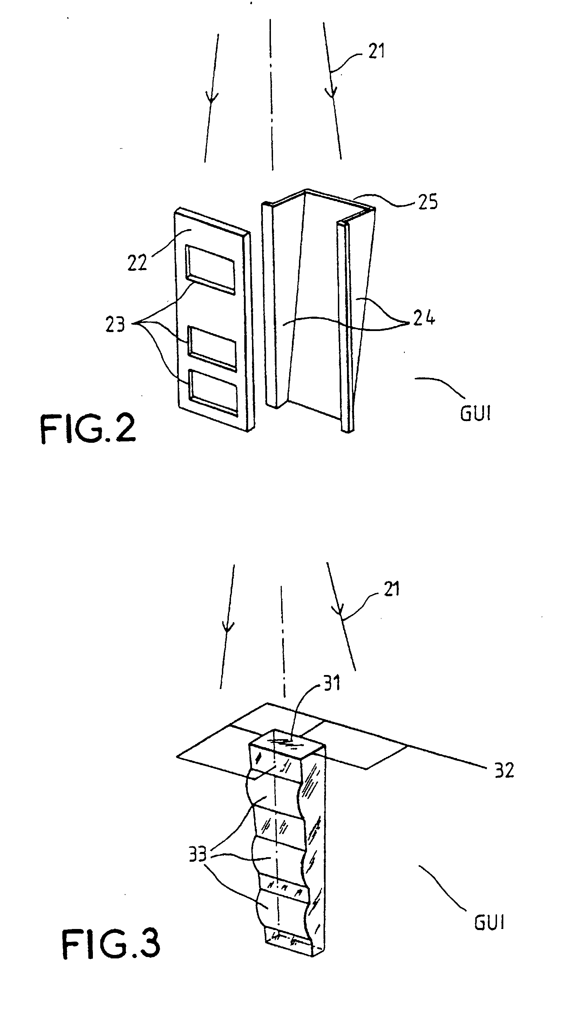

Deux exemples de réalisation de guide pour le dispositif selon l'invention sont représentés sur les figures 2 et 3. La figure 2 schématise un guide de lumière, creux, conçu pour optimiser le guidage d'un faisceau de lumière 21 parallèle ou faiblement divergent. Il est composé de quatre faces : la face avant 22, orientée vers l'intérieur de l'enceinte et possédant une ou plusieures ouvertures 23 qui constituent les zones de sortie du guide, les faces latérales 24 et la face arrière 25, opposée aux ouvertures. Les ouvertures 23 coïncident avec les ouvertures dans les parois latérales 12 de la figure 1. Leurs positions sont adaptées à la géométrie du four afin d'assurer le meilleur éclairage du volume utile de l'enceinte. Le faisceau lumineux 21 pénètre dans le guide par une ouverture située sur le dessus du guide et qui constitue la zone d'entrée. Toutes les faces internes du guide sont réfléchissantes afin d'envoyer le flux lumineux incident vers les ouvertures 23. Il est possible qu'elles ne le soient pas toutes mais l'efficacité du guide risque dans ce cas d'être amoindrie. Le matériau utilisé peut être par exemple l'inox, qui est réfléchissant. Une simple tôle d'acier peut également être utilisée ou de la fonte d'aluminium moulée qui permet d'inclure d'autres fonctions comme par exemple le maintien du réflecteur ou le vissage de la lampe à l'extrémité du guide. Si ces types de matériaux sont utilisés, il faut prévoir un traitement réfléchissant des faces internes, par exemple du type chromage. Il peut également être avantageux de rendre les faces internes du guide légèrement diffusantes, en particulier la face arrière 25, par exemple par brossage des revêtements internes, pour obtenir encore une meilleure répartition du flux. Si l'ouverture du faisceau incident est suffisante, la forme du guide peut simplement être un parallélépipède rectangle. Cependant, l'éclairage de l'enceinte est généralement meilleur si la face arrière 25 présente un angle par rapport à la face avant 22, comme cela est représenté sur la figure 1. Ainsi dans cet exemple, la section du guide est maximal du côté de la lampe et diminue jusqu'à son autre extrémité. Outre les avantages en terme d'efficacité d'éclairement, cette forme permet un encombrement faible du guide. On peut encore optimiser l'éclairage en adaptant la forme du guide à la position des ouverture 23 et à la géométrie du volume utile de l'enceinte. Par exemple, la face arrière 25 peut être une combinaison de formes géométriques courbes et de pentes. Les ouvertures 23 sont avantageusement fermées par des fenêtres VER qui laissent passer la lumière, par exemple des verrines. Il est préférable que ces fenêtres ne soient pas démontables pour éviter la pénétration de toute salissure à l'intérieur des guides. Les fenêtres VER peuvent être diffusantes ou diffractantes afin d'assurer une meilleure répartition de la lumière dans l'enceinte. Leur forme est quelconque; elle peut par exemple reprendre la forme des gradins. Les fenêtres VER peuvent aussi être fixées directement au niveau des parois latérales 12 et ferment les ouvertures situées dans ces parois et qui coïncident avec les ouvertures 23 du guide GUI. L'encombrement d'un tel guide est faible. Il permet de garder la couche d'isolant 14 intacte sans diminuer pour autant la largeur totale de l'enceinte. Les expériences menées par la déposante ont montré que l'éclairement dans le volume utile de l'enceinte, obtenu avec un dispositif d'éclairage selon l'invention, comportant deux lampes associées chacune d'elle à un guide du type de celui de la figure 2, est de l'ordre de 300 lux. Les lampes utilisées dans ces expériences sont des lampes halogène du commerce munies d'un réflecteur parabolique.

Un deuxième exemple de guide de lumière, lui aussi optimisé pour le guidage d'un faisceau à faible ouverture 21, est schématisé sur la figure 3. Il s'agit dans ce cas d'un barreau plein. Le faisceau 21 pénètre par la face supérieure 31. Avantageusement, le matériau choisi pour constituer le guide présente un indice de réfraction tel que les effets de réflexion totale aux interfaces peuvent être exploités pour guider le faisceau lumineux vers les zones de sortie 33. On peut aussi utiliser un matériau classique et peu coûteux, par exemple du verre, qui peut être moulé, coulé ou découpé, en métallisant éventuellement les faces 32 afin de renforcer le coefficient de réflexion. Dans cet exemple, les verrines VER sont intégrées dans le guide puisqu'elles sont confondues avec les zones de sortie 33. Là encore, le barreau peut présenter une section variable afin d'optimiser la répartition du flux dans le volume utile de l'enceinte.

Bien sûr, d'autres types de guides de lumière sont envisageables. Ils doivent être adaptés au choix de la lampe et du réflecteur pour optimiser l'éclairage dans le volume utile de l'enceinte sur plusieurs niveaux.

## Revendications

1. Dispositif d'éclairage de l'enceinte (11) de cuisson d'un four domestique (F) comportant au moins une lampe (LAM) positionnée à l'extérieur de l'enceinte, émettant un faisceau lumineux (21) et son système d'alimentation, **caractérisé en ce qu'**il comporte le long d'au moins une des parois latérales (12) de l'enceinte, un guide de lumière (GUI) situé à l'extérieur de l'enceinte, ladite paroi étant munie de plusieurs ouvertures, ledit guide formant un conduit creux, comportant notamment une zone d'entrée recevant ledit faisceau, une face avant (22) s'étendant le long de ladite paroi latérale, et plusieurs zones de sortie (23, 33) situées sur ladite face avant et coïncidant avec lesdites ouvertures, le guide transportant ledit faisceau lumineux vers lesdites zones de sortie, permettant ainsi un éclairage latéral multiniveau de ladite enceinte.

2. Dispositif selon la revendication 1, **caractérisé en ce que** ladite face avant (22) possède plusieurs ouvertures (23) formant lesdites zones de sortie, et le guide de lumière comporte une face arrière (25) et deux faces latérales (24), le faisceau lumineux (21) pénétrant dans le guide par une ouverture située sur le dessus du guide formant ladite zone d'entrée, le revêtement interne d'au moins une des faces (23, 24, 25) étant réfléchissant.

3. Dispositif selon la revendication 2, **caractérisé en ce que** ce revêtement est de type chromage.

4. Dispositif selon l'une quelconque des revendications 2 ou 3, **caractérisé en ce que** le guide est réalisé à partir de fonte d'aluminium moulée.

5. Dispositif selon l'une quelconque des revendications 2 à 4, **caractérisé en ce que** le revêtement interne d'au moins une des faces (23, 24, 25) est diffusant.

6. Dispositif selon l'une quelconque des revendications 2 à 5, **caractérisé en ce que** la face arrière (25) du guide est une combinaison de formes géométriques courbes et/ou de pentes faisant un angle non nul avec la face avant (22).

7. Dispositif selon la revendication 1, **caractérisé en ce que** le guide de lumière (GUI) est un barreau à section variable, le faisceau lumineux (21) pénétrant dans le guide par une face (31) située sur le dessus du guide formant la zone d'entrée.

8. Dispositif selon la revendication 7, **caractérisé en ce que** le barreau est fait à partir d'un matériau présentant un indice de réfraction qui permet la propagation de la lumière dans ledit barreau grâce à des effets de réflexion totale aux interfaces.

9. Dispositif selon l'une quelconque des revendications 7 ou 8, **caractérisé en ce que** le barreau est fait à partir de verre.

10. Dispositif selon l'une quelconque des revendications 7 à 9, **caractérisé en ce que** les faces du barreau sont métallisées pour augmenter le coefficient de réflexion.

11. Dispositif selon l'une quelconque des revendications précédentes, **caractérisé en ce que** la lampe est associée à un réflecteur de type parabolique et **en ce que** le filament de la lampe est positionné à proximité du foyer du paraboloïde, le faisceau lumineux émis (21) étant sensiblement parallèle.

12. Dispositif selon l'une quelconque des revendications précédentes, **caractérisé en ce que** la lampe (LAM) est de type lampe halogène.

## Patentansprüche

1. Beleuchtungsvorrichtung für die Backmuffel (11) eines Haushaltsofens (F), enthaltend zumindest eine Lampe (LAM), die außerhalb der Muffel positioniert ist und einen Lichtstrahl (21) ausgibt, und deren Versorgungssystem, **dadurch gekennzeichnet, dass** sie entlang zumindest einer der Seitenwände (12) der Muffel einen Lichtleiter (GUI) enthält, der sich außerhalb der Muffel befindet, wobei die genannte Wand mit mehreren Öffnungen versehen ist, wobei der genannte Lichtleiter eine Hohlleitung bildet, insbesondere einen den genannten Strahl aufnehmenden Eintrittsbereich, und eine entlang der genannten Seitenwand sich erstreckende Vorderseite (22) und mehrere Austrittsbereiche (23, 33) enthält, die sich an der genannten Vorderseite befinden und mit den genannten Öffnungen übereinstimmen, wobei der Lichtleiter den genannten Lichtstrahl zu den genannten Austrittsbereichen leitet und damit eine seitliche Multiniveau Beleuchtung der genannten Muffel gestattet.

2. Vorrichtung nach Anspruch 1, **dadurch gekennzeichnet, dass** die genannte Vorderseite (22) mehrere die genannten Austrittsbereiche bildende Öffnungen (23) besitzt und der Lichtleiter eine Hinterseite (25) und zwei Seitenflächen (24) enthält, wobei der Lichtstrahl (21) über eine Öffnung in den Lichtleiter eindringt, die sich an der den Eintrittsbereich bildenden Oberseite des Lichtleiters befindet, und wobei die Innenbeschichtung zumindest einer der Seiten (23, 24, 25) reflektierend ist.

3. Vorrichtung nach Anspruch 2, **dadurch gekennzeichnet, dass** die Beschichtung von der Art einer Verchromung ist.

4. Vorrichtung nach einem der Ansprüche 2 oder 3, **dadurch gekennzeichnet, dass** der Lichtleiter aus geformtem Aluminiumguss hergestellt ist.

5. Vorrichtung nach einem der Ansprüche 2 bis 4, **dadurch gekennzeichnet, dass** die Innenbeschichtung zumindest einer der Seiten (23, 24, 25) zerstreuend ist.

6. Vorrichtung nach einem der Ansprüche 2 bis 5, **dadurch gekennzeichnet, dass** die Hinterseite (25) des Lichtleiters eine Kombination von geometrischen Formen mit Krümmungen und/oder Neigungen ist, die mit der Vorderseite (22) einen Winkel ungleich null einschließen.

7. Vorrichtung nach Anspruch 1, **dadurch gekennzeichnet, dass** der Lichtleiter (GUI) ein Stab mit veränderlichem Querschnitt ist, wobei der Lichtstrahl (21) über eine Seite (31) in den Lichtleiter eindringt, die sich an der den Eintrittsbereich bildenden Oberseite des Lichtleiters befindet.

8. Vorrichtung nach Anspruch 7, **dadurch gekennzeichnet, dass** der Stab aus einem Material mit einem Brechungsindex hergestellt ist, der aufgrund von voller Reflexion an den Schnittstellen die Ausbreitung des Lichts im genannten Stab gestattet.

9. Vorrichtung nach einem der Ansprüche 7 oder 8, **dadurch gekennzeichnet, dass** der Stab aus Glas hergestellt ist.

10. Vorrichtung nach einem der Ansprüche 7 bis 9, **dadurch gekennzeichnet, dass** die Seitenflächen des Stabs metallisiert sind, um den Reflexionskoeffizienten zu erhöhen.

11. Vorrichtung nach einem der vorangehenden Ansprüche, **dadurch gekennzeichnet, dass** die Lampe einem parabolartigen Reflektor zugeordnet ist und dass die Glühwendel der Lampe nahe dem Brennpunkt der Parabols positioniert ist, wobei der ausgesandte Lichtstrahl (21) im wesentlichen parallel verläuft.

12. Vorrichtung nach einem der vorangehenden Ansprüche, **dadurch gekennzeichnet, dass** die Lampe (LAM) vom Typ Halogenlampe ist.

## Claims

1. A light for the cooking oven (11) of a domestic cooker (F), comprising at least one lamp (LAM) positioned outside the oven for emitting a light beam (21), and the supply system thereof, **characterised in that** it includes, along at least one of the side walls (12) of the oven, a light guide (GUI) situated outside the oven, the said wall having a plurality of apertures, the said guide constituting a hollow duct and including, in particular, an input zone for receiving the said beam, a front face (22) extending along the said side wall, and a plurality of output zones (23, 33) situated on the said front face and coincident with the said apertures, the guide conveying the said light beam towards the said output zones whereby to permit multi-level side illumination of the said oven.

2. A light according to Claim 1, **characterised in that** the said front face (22) has a plurality of apertures (23) constituting the said output zones, and the light guide has a rear face (25) and two side faces (24), the light beam (21) penetrating into the guide through an aperture situated in the top part of the guide which constitutes the said input zone, the internal coating of at least one of the faces (23, 24, 25) being reflective.

3. A light according to Claim 2, **characterised in that** the said coating is of the chrome-plated type.

4. A light according to either one of Claim 2 or Claim 3, **characterised in that** the guide is made from an aluminium casting.

5. A light according to any one of Claims 2 to 4, **characterised in that** the internal coating on at least one of the faces (23, 24, 25) is diffusing.

6. A light according to any one of Claims 2 to 5, **characterised in that** the rear face (25) of the guide is a combination of curved geometrical forms and/or slopes defining a non-zero angle with the front face (22).

7. A light according to Claim 1, **characterised in that** the light guide (GUI) is a barrel member of variable cross section, the light beam (21) penetrating into the guide through a face (31) situated on the top of the guide that constitutes the input zone.

8. A light according to Claim 7, **characterised in that** the barrel member is made of a material having a refractive index which enables the light to propagate in the said barrel member by virtue of total reflection effects at the interfaces.

9. A light according to either one of Claim 7 or Claim 8, **characterised in that** the barrel member is made of glass.

10. A light according to any one of Claims 7 to 9, **characterised in that** the faces of the barrel member are metallised so as to increase the coefficient of reflection.

11. A light according to any one of the preceding Claims, **characterised in that** the lamp is associated with a reflector of the parabolic type, and **in that** the filament of the lamp is positioned close to the focus of the paraboloid, the emitted light beam (21) being substantially parallel.

12. A light according to any one of the preceding Claims, **characterised in that** the lamp (LAM) is of the halogen type.
